(19) **Europäisches Patentamt / European Patent Office / Office européen des brevets**

(11) **EP 4 760 346 A1**

(12) # EUROPEAN PATENT APPLICATION

(43) Date of publication:
**17.06.2026 Bulletin 2026/25**

(21) Application number: **24219380.3**

(22) Date of filing: **12.12.2024**

(51) International Patent Classification (IPC):
**G01S 7/497** $^{(2006.01)}$ **G01S 17/34** $^{(2020.01)}$
**G01S 7/4911** $^{(2020.01)}$ **G01S 7/4912** $^{(2020.01)}$

(52) Cooperative Patent Classification (CPC):
**G01S 7/497; G01S 7/4911; G01S 7/4917; G01S 17/34**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Stichting IMEC Nederland**
**5656 AE Eindhoven (NL)**

(72) Inventors:
- **PÉREZ SANTACRUZ, Javier**
  **5022 CE Tilburg (NL)**
- **ROMME, Jac**
  **3118 JP Schiedam (NL)**

(74) Representative: **AWA Sweden AB**
**Matrosgatan 1**
**Box 5117**
**200 71 Malmö (SE)**

(54) **PHASE NOISE COMPENSATION FOR A FREQUENCY MODULATED CONTINUOUS WAVE, FMCW, LIGHT DETECTION AND RANGING, LIDAR, SYSTEM**

(57) There is provided a device (100) for phase noise compensation for a frequency modulated continuous wave, FMCW, light detection and ranging, LIDAR, system (1000). Said device comprises:
an optical interferometer (110) receiving a light signal from a source (210) of the LIDAR system, splitting the light signal into a first and a second light signal propagating in a first and a second path having a preset delay therebetween, and combining the light signals having passed the first and the second path,
a detector (120) detecting the combined signals;
a phase noise determination module (140) receiving the detected signal and determining a plurality of phase noise signals corresponding to phase noise signals of integer numbers of the preset delay; and
a phase noise compensation module (150) processing a LIDAR response signal by compensating phase noise in the LIDAR response signal using the plurality of phase noise signals to form a combined compensated LIDAR response signal, and determining a fast Fourier transform of the compensated signal for a range of distances to the target encompassing all distances corresponding to the integer numbers of the preset delay.

------ Optical
——— Electrical
—·—·— Digital

Fig. 1

**Description**

Technical field

The present disclosure relates to light detection and ranging (LIDAR) and more specifically to a device and a method for phase noise compensation for a frequency modulated continuous wave (FMCW) LIDAR system.

Background

Light Detection and Ranging (LIDAR) is a well-known technology for measuring the distance between a LIDAR system and targets of the surrounding environment. LIDAR is used for a variety of applications such as advanced driving assistance systems (ADAS), robotics, aviation, surveillance, and 3D imaging. Using optical signals with short wavelengths enables LIDAR to use a high number of antenna elements, thereby providing high angular resolution. Further, LIDAR provides measurements at large distances, in terms of a few hundred meters, with range resolutions of a few centimeters. In conclusion, LIDAR is a suitable technology for middle and long-range automotive applications (among others) due to its combination of large measuring range, range resolution, and angular resolution characteristics, compared to other sensing technologies in the market such as radar and stereo cameras.

There are three main LIDAR technologies: pulsed, amplitude-modulated continuous-wave (AMCW), and frequency-modulated continuous-wave (FMCW). Pulsed and AMCW technologies are based on modulating the intensity of the light. In contrast, FMCW LIDAR is based on modulation of the frequency of the optical signal. Due to its coherent detection scheme, FMCW LIDAR offers better receiver sensitivity, and thus improved signal-to-noise ratio (SNR), than pulsed or AMCW LIDAR. Due to its fine resolution, enhanced SNR, and direct velocity estimation, FMWC LIDAR is well suited for middle and long-range automotive applications.

However, one of the major drawbacks with FMCW LIDAR systems is their sensitivity to phase noise. For example, the range measuring capability of FMCW LIDAR systems is significantly reduced under phase noise conditions, especially at larger distances. The effect may be particularly pronounced for FMCW LIDAR systems employing high linewidth lasers. Low linewidth lasers may be used as an alternative, mitigating negative effects of the phase noise at least to some extent. However, low linewidth lasers require a highly accurate manufacturing process, increasing the final cost of the lasers and thus of the LIDAR systems.

Hence, there is a need in the art for further improvements related to the FMCW LIDAR technology.

Summary

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided a device for phase noise compensation for a frequency modulated continuous wave, FMCW, light detection and ranging, LIDAR, system, said device comprising:

an optical interferometer configured to receive a light signal, wherein the light signal is a FMCW light signal generated by a source of the FMCW LIDAR system, wherein the optical interferometer is configured to split the light signal into a first light signal propagating in a first path and a second light signal propagating in a second path, wherein the first path has a preset delay in relation to the second path, wherein the preset delay corresponds to delay caused by propagation of a preset distance, and to combine the first and the second light signals having passed the first and the second path, respectively,
a detector for detecting the combined first and second light signals;
a phase noise determination module configured to receive a detected signal from the detector and to determine a plurality of phase noise signals corresponding to phase noise signals of integer numbers of the preset delay; and
a phase noise compensation module configured to receive a LIDAR response signal, and to process the LIDAR response signal by compensating phase noise in the LIDAR response signal using the plurality of phase noise signals to form a combined compensated LIDAR response signal, and to determine a fast Fourier transform, FFT, of the combined compensated LIDAR response signal for a range of distances to the target encompassing all distances corresponding to the integer numbers of the preset delay.

According to a second aspect there is provided a frequency modulated continuous wave, FMCW, light detection and ranging, LIDAR, system comprising:

the device for phase noise compensation according to the first aspect;

a source configured to generate the light signal, said source comprising:

a laser configured to generate an optical carrier signal;
a frequency modulation module configured to modulate a frequency of the optical carrier signal; and
an optical beam splitter arranged in a path of the modulated optical carrier signal, and configured to split the modulated optical carrier signal into a LIDAR emission signal being emitted from the FMCW LIDAR system, and the light signal being sent to the optical interferometer of the device for phase noise compensation; and

a LIDAR detector configured to detect light from the LIDAR emission signal being reflected back towards the FMCW LIDAR system, to detect the LIDAR response signal.

It serves to mention that the phrases "FMCW LIDAR system" and "LIDAR system" may be used interchangeably throughout the present disclosure. By use of either of the two phrases, an FMCW LIDAR system is meant, if not explicitly stated otherwise.

By the term "source" is here meant any unit, device and/or element that can emit at least partially coherent light. The source may comprise a laser, as for example a laser diode, configured to generate an optical carrier signal. The optical carrier signal is generated in the form of laser light.

In this context the term "light" should be allowed a broad interpretation, not limited to visible electromagnetic radiation. Rather, the term "light" may also include for example ultra-violet light and infra-red light.

The source may comprise a frequency modulation module configured to modulate a frequency of the optical carrier signal. It serves to mention that the frequency modulation module may be external to the laser, such that the frequency modulation may be performed on the laser light output from the laser. Alternatively, the frequency modulation module may form part of the laser, such that the frequency modulation may be performed within the laser. By way of example, the frequency modulation may be performed by direct frequency modulation of the laser.

The source may further comprise an optical beam splitter arranged in a path of the modulated optical carrier signal, and configured to split the modulated optical carrier signal into a LIDAR emission signal which may be emitted from the FMCW LIDAR system, and the light signal being provided to the optical interferometer of the device for phase noise compensation. Thus, the "light signal" is the part of the light being split off from the modulated optical carrier signal, and directed to the optical interferometer. The remainder of the modulated optical carrier signal forms the LIDAR emission signal which may be emitted from the FMCW LIDAR system, for example towards a target.

The optical interferometer is configured to split the light signal into the first light signal propagating in the first path and the second light signal propagating in the second path. The first path has a preset delay in relation to the second path. The preset delay corresponds to a delay caused by propagation of a preset distance. By way of example, the preset delay may be provided by the first path and the second path having different optical path lengths. It serves to mention that the preset delay is a known preset delay. The preset delay may result in a phase difference between the first and second light signals corresponding to a difference in distance of light propagation in ambient air. By way of example, the preset delay may be chosen to correspond to a distance of 0.5 m, 1 m, 2 m, 3 m, 4 m, 5 m, or 10 m. Given as a non-limiting example, the preset delay may be provided by one of the first and the second paths being longer than the other path. A longer path may be achieved by guiding the light in a loop, a spiral or the like, so that a long path length may be provided in a compact solution.

After having passed the first and the second paths respectively, the first and the second light signals are combined again. When the combined first and second light signals reach the detector, a beat frequency may be detected by the detector. The beat frequency is linked to the preset delay of the optical interferometer. By way of example, the beat frequency may be proportional to the preset delay.

By the term "detector" is here meant any unit or device comprising a light sensitive element configured to detect the light intensity impinging onto the light sensitive element, to produce an electrical signal in response thereof, and to allow read-out of the electrical signal representing the light intensity. Given as non-limiting examples, a detector may be, but is not limited to, a photodiode, a photo-multiplier tube (PMT), and an image detector such as a charge-coupled device (CCD) and a complementary metal oxide semiconductor (CMOS).

In the present context, the detector is typically a photodiode. In that respect the detector may be a balanced photodiode or an unbalanced photodiode.

The detector may be arranged such that the combined first and second signal impinges onto the detector, whereby the detector may detect the beat frequency formed by the combined signal.

The phase noise determination module is configured to receive the detected signal from the detector and to determine the plurality of phase noise signals corresponding to integer numbers of the preset delay of the optical interferometer. Typically, the phase noise determination module is configured to determine the phase noise signal corresponding to the preset delay based on the detected signal. Put differently, the phase noise determination module is configured to determine the phase noise signal of a light signal that has propagated the preset distance.

Once the phase noise signal corresponding to the preset delay has been determined, the plurality of phase noise signals may be determined based on the phase noise signal corresponding to the preset delay. The plurality of phase noise signals may thus correspond to the phase noise occurring at integer numbers of the preset delay and thus of the pre-selected distances. Put differently, the plurality of phase noise signals may represent phase noise signals occurring at a target located at a plurality of distances from the FMCW LIDAR system. Typically, the plurality of phase noise signals spans the full range of distances intended to be covered by the FMCW LIDAR system. By way of example, a plurality of distances may be pre-selected, at which the plurality of phase noise signals are determined. Typically, the pre-selected distances correspond to integer numbers of the preset distance. Given only as a non-limiting example, in case the LIDAR system is configured to detect targets within a distance of 100 m of the LIDAR system, and the preset delay corresponds to a preset distance of 10 m, a set of pre-selected distances may be 10 m, 20 m, 30 m, 40 m, 50 m, 60 m, 70 m, 80 m, 90 m, and 100 m.

It serves to mention that the plurality of phase noise signals may not necessarily be all possible phase noise signals within the full range of distances to the target. Moreover, the plurality of phase noise signals may not necessarily correspond to consecutive integer numbers of the preset delay. Given as non-limiting examples, the plurality of phase noise signals may correspond to the integer numbers 1, 3, 5, 7, or 1, 4, 7, 10, of the preset delay.

As previously mentioned, the modulated optical carrier signal may be split into the light signal being provided to the optical interferometer and a LIDAR emission signal. The remainder of the modulated optical carrier signal thus forms the LIDAR emission signal which may be emitted from the FMCW LIDAR system, for example towards a target. In case the LIDAR emission signal reaches a target, at least some of the LIDAR emission signal may be reflected back towards the LIDAR system, forming the LIDAR response signal.

The phase noise compensation module receives the LIDAR response signal. The phase noise compensation module may then process the LIDAR response signal by compensating the LIDAR response signal for phase noise by using the plurality of phase noise signals determined by the phase noise determination module, as previously mentioned. Thus, each phase noise signal may compensate the LIDAR response signal for a phase noise associated with a specific target distance. Each such distance corresponds to an integer number of the preset distance corresponding to the preset delay. Put differently, each phase noise signal may compensate for phase noise corresponding to the phase noise at a different distance and thus a different delay. More specifically, each respective phase noise signal may compensate for phase noise corresponding to a mutually unique distance and thus a mutually unique delay. By the present arrangement, a combined compensated LIDAR response signal is formed. One of the phase noise signals of the plurality of phase noise signals may correspond to the phase noise occurring at a distance at or close to the distance of the target. A good compensation for such phase noise may therefore be provided by the phase noise compensation module.

Once the combined compensated LIDAR response signal is formed, an FFT of the combined compensated LIDAR response signal may be determined, for a range of distances to the target encompassing all distances corresponding to the integer numbers of the preset delay.

An advantage is that instead of compensating phase noise in the LIDAR response signal using each of the phase noise signals, resulting in a plurality of compensated LIDAR response signals, and then individually determining the FFT for all of the plurality of compensated LIDAR response signals, the FFT may instead be determined only once but for the combined compensated LIDAR response signal. In this manner, the complexity of the FFT determination may be significantly reduced, and a much more efficient phase noise compensation may be provided.

Another advantage is that by the present phase noise compensation, the signal-to-noise ratio (SNR) of the LIDAR response signal may be significantly improved, whereby a more accurate distance and/or velocity of the target may be determined. By the present arrangement, higher detection accuracy may be provided than when using for example pulsed and AMCW LIDAR solutions.

Yet another advantage is that applying the proposed phase noise compensation enables the LIDAR system to use a laser with relative high linewidth, as opposed to a low linewidth laser. Lasers of higher linewidth are cheap to manufacture relative to low linewidth lasers, thus the overall cost of FMCW LIDAR system may be reduced, while still avoiding the impairments related to phase noise.

The LIDAR detector of the FMCW LIDAR system configured to detect the LIDAR response signal is also a "detector" according to what has been described above. Thus, by way of example, the LIDAR detector may be, but is not limited to, a balanced and/or unbalanced photodiode, a photo-multiplier tube (PMT), and an image detector.

It serves to mention that a small portion of the LIDAR emission signal may be split off from the LIDAR emission signal prior to the LIDAR emission signal being emitted from the LIDAR system. The portion being split off from the LIDAR emission signal may be referred to as a local oscillator signal. The LIDAR emission signal may subsequently be emitted for example towards a target. In case the LIDAR emission signal reaches a target, at least some of the LIDAR emission signal may be reflected back towards the LIDAR system. The LIDAR emission signal being reflected back and the local oscillator signal may then be combined again, at the LIDAR system. When the combined signals reach the LIDAR detector, a beat frequency may be detected by the LIDAR detector. This beat frequency is linked to the distance between the LIDAR system and the target. In the present LIDAR system, the combined signal may be detected by the LIDAR detector, thereby detecting the LIDAR response signal.

It is conceivable that the target may have a zero velocity with respect the LIDAR system, and more specifically the LIDAR detector. Thus, the distance between the target and the LIDAR detector may not be changing. This situation may be referred to as a static scenario. In a static scenario the LIDAR response signal is assumed to be without influence of the Doppler effect. Under this assumption, each frequency of the beat frequency is associated to a specific target distance.

However, it is equally conceivable that the target may change its distance with respect to the LIDAR system, i.e. the target may have a non-zero velocity with respect to the LIDAR system, resulting in a dynamic scenario. In a dynamic scenario, the LIDAR response signal may be affected by the Doppler effect caused by the movement of the target, which in turn may affect the beat frequency. Therefore, a beat frequency of the LIDAR response signal may be associated with any target distance. Consequently, an uncertainty may arise as to what phase noise signal of the plurality of phase noise signals to use for compensation. By way of example, in a dynamic scenario the phase noise occurring in the LIDAR response signal may be different than the one corresponding to specific target distance, due to the Doppler effect. Therefore, a phase noise signal corresponding to a different distance than that of the target may provide a better phase noise compensation. Thus, depending on the velocity of the target, the phase noise may be different and therefore different phase noise signals may be needed. However, with the phase noise compensation of the present disclosure, all of the plurality of phase noise signals may be used for the compensation over the full range of distances.

An advantage with the phase noise compensation of the present disclosure is that it may provide good phase noise compensation in the static scenario as well as the dynamic scenario, since all of the plurality of phase noise signals are used for the compensation over the full range of distances.

According to an embodiment, the phase noise compensation module is configured to process the LIDAR response signal in a plurality of branches, wherein the phase noise compensation module is configured to compensate, for each branch, phase noise in the LIDAR response signal using one of the plurality of phase noise signals, and wherein the phase noise compensation module is further configured to add the compensated LIDAR response signals together to form the combined compensated LIDAR response signal.

Put differently, in each branch a mutually unique phase noise signal of the plurality of phase noise signals is use for compensating phase noise in the LIDAR response signal. Thus, in different branches, different phase noise signals are used for the compensation. Together, the processing in the plurality of branches result in a plurality of compensated LIDAR response signals, each of which having been compensated for phase noise by a mutually unique phase noise signal.

Once the plurality of compensated LIDAR response signals have been determined, the plurality of compensated LIDAR response signals are added together, thereby forming the combined compensated LIDAR response signal.

The combined compensated LIDAR response signal is effectively the LIDAR response signal compensated for all of the plurality of phase noise signals corresponding to phase noise from a plurality of different predetermined target distances encompassing all distances corresponding to the integer numbers of the preset distance and thus the preset delay.

An advantage with this embodiment is that a device for phase noise compensation for a FMCW LIDAR system may be provided, with the capability of compensating LIDAR response signals for phase noise from several targets at several different distances.

Another advantage is that a device for phase noise compensation may be provided, that may accurately determine distances to targets even when the target is moving with respect to the LIDAR system, and yet maintaining low computational complexity, and thus maintaining fast processing. Thus, a versatile device for phase noise compensation may be provided, with the capability of handling both static and dynamic scenarios.

Yet another advantage is that a phase noise compensation with less complexity and which is more efficient may be provided.

According to an embodiment, the phase noise compensation module is configured to process the LIDAR response signal by adding the plurality of phase noise signals together to form a combined phase noise signal, and wherein the phase noise compensation module is further configured to compensate phase noise in the LIDAR response signal using the combined phase noise signal to form the combined compensated LIDAR response signal.

Thus, instead of processing the LIDAR response signal in different branches, as described in relation to the previous embodiment, the phase noise compensation module may alternatively add all of the plurality of phase noise signals together to form a combined phase noise signal, prior to phase noise compensation of the LIDAR response signal. Adding the plurality of phase noise signals together may be based on an exponential complex operation. More specifically, the phase noise compensation module may form, for each respective phase noise signal, an exponential complex whose argument is the negative of the respective phase noise signal, thereby forming a plurality of exponential complexes of the plurality of phase noise signals. Subsequently, the phase noise compensation module may add said exponential complexes of the plurality of exponential complexes together, forming the combined phase noise signal.

Once the combined phase noise signal is formed, the combined phase noise signal may be used for compensating phase noise in the LIDAR response signal, thereby forming the combined compensated LIDAR response signal. By the present arrangement, the LIDAR response signal is compensated for all of the plurality of phase noise signals by a single compensation operation.

The combined compensated LIDAR response signal is effectively the LIDAR response signal compensated for all of the plurality of phase noise signals corresponding to phase noise from a plurality of different predetermined target distances encompassing all distances corresponding to the integer numbers of the preset distance and thus the preset delay.

An advantage with this embodiment is that a device for phase noise compensation for a FMCW LIDAR system may be provided, with the capability of compensating LIDAR response signals for phase noise from several targets at several different distances.

Another advantage is that a device for phase noise compensation may be provided, that may accurately determine distances to targets even when the target is moving with respect to the LIDAR system, and yet maintaining low computational complexity, and thus maintaining fast processing. Thus, a versatile device for phase noise compensation may be provided, with the capability of handling both static and dynamic scenarios.

Yet another advantage is that a phase noise compensation with less complexity and which is more efficient may be provided.

It should be realized that the phase noise determination module is not necessarily limited to determining the plurality of phase noise signals such that the plurality of phase noise signals correspond to only integer numbers of the preset delay.

According to an embodiment, the phase noise determination module is configured to determine the plurality of phase noise signals to further comprise phase noise signals corresponding to non-integer numbers of the preset delay.

Thus, the plurality of phase noise signals is not limited to comprising only phase noise signals corresponding to integer numbers of the preset delay, but may optionally also comprise phase noise signals corresponding to non-integer multiples of the preset delay.

By way of example, non-integer numbers may be half-integer numbers, quarter-integer numbers, or any other fractional numbers. Given as non-limiting examples, the plurality of phase noise signals may comprise phase noise signals corresponding to the non-integer numbers 1/2, 3/2, 5/2 and/or 1/4, 2/4, 3/4, 5/4 of the preset delay, in addition to the integer numbers.

As previously mentioned, the phase noise compensation module receives the LIDAR response signal, and may process the LIDAR response signal in a plurality of branches. In each branch, the LIDAR response signal may be compensated for phase noise by using one of the plurality of phase noise signals determined by the phase noise determination module, associated with a specific target distance. It serves to mentioned that, in case the plurality of phase noise signals comprises phase noise signals corresponding to non-integer numbers of the preset delay, in addition to integer numbers, each such distance may correspond to an integer number or a non-integer number of the preset distance corresponding to the preset delay. Thus, in addition to the branches in which the LIDAR response signal is compensated for a phase noise signal corresponding to an integer number of the preset delay, the plurality of branches may further comprise branches in which the LIDAR response signal may be compensated for a phase noise signal corresponding to a non-integer number of the preset delay.

The use of phase noise signals corresponding to also non-integer numbers of preset delays, in addition to integer numbers, provides a finer range granularity. This, in turn, may improve the accuracy of the phase noise compensation since with a finer range granularity the phase noise of the target is more likely to be close to the phase noise signals of the plurality of phase noise signals. After compensation of the LIDAR response signal with the plurality of phase noise signals, the residual phase noise may be further reduced.

It serves to mention that the use of phase noise signals corresponding to also non-integer numbers of the preset delay may increase the complexity to the computation. Thus, implementation may require a balance between accuracy and computational complexity, suitable for the respective use case requirements. By way of example, phase noise signals corresponding to integer numbers of the preset delay may be used for a course phase noise compensation with low computational complexity, whereas phase noise signals corresponding to also non-integer numbers of the preset delay may be used to further refine the compensation, providing higher accuracy, however also higher computational complexity.

An advantage with this embodiment is that a device for phase noise compensation with a finer range granularity and therefor higher accuracy may be provided.

According to an embodiment, the integer numbers determining the plurality of phase noise signals are evenly distributed.

According to an embodiment, the integer numbers determining the plurality of phase noise signals are non-evenly distributed.

According to an embodiment, the phase noise determination module is further configured to:

extract a phase angle ramp of the detected signal,
on a condition that a phase difference between a phase angle of the phase angle ramp and a consecutive phase angle of the phase angle ramp is larger than or equal to $2\pi$, add a multiple of $2\pi$ to the consecutive phase angle of the phase angle ramp, and

subtract a reference phase angle ramp from the extracted phase angle ramp, wherein a slope of the reference phase angle ramp is determined by the preset delay, to determine a phase noise signal of a plurality of phase noise signals, corresponding to the preset delay.

The operation of adding a multiple of $2\pi$ to the consecutive phase angle of the phase angle ramp if the phase difference between a phase angle and a consecutive phase angle of the phase angle ramp is larger than or equal to $2\pi$, is sometimes referred to as an "unwrap" operation. By way of example, "unwrap" is the name of this operation in "Matlab" - a programming and numeric computing program provided by MathWorks Inc, Natick, MA, United States. The purpose of performing the unwrap operation on the extracted phase angle ramp is to eliminate $2\pi$ or 360° jumps in the extracted phase angle ramp.

By the term "reference phase angle ramp" is here meant a phase angle ramp without any added phase noise. By subtracting the reference phase angle ramp from the extracted phase angle ramp of the detected signal, what remains is the phase noise signal corresponding to the preset delay.

It serves to mention that the phase noise determination module is not limited to this approach in order to extract the phase noise signal from the detected signal. By way of example, the phase noise determination module may alternatively be configured to employ frequency down-conversion in combination with filtering such as low-pass filtering.

According to an embodiment, the preset delay of the first path in relation to the second path is a fixed preset delay.

An advantage with this embodiment is that an optical interferometer with a fixed delay may be easily manufactured.

According to an embodiment, the preset delay of the first path in relation to the second path is tunable.

By way of example, a tunable preset delay may be provided by means of a set of fixed delays interconnected by a set of optical switches. By setting the switches in different configuration, the light may be routed in a number of different ways through the fixed delays, whereby providing different optical path lengths and thus also different delays.

An advantage with this embodiment is that a device for phase noise compensation for a FMCW LIDAR system that may more precisely match the phase noise used for compensation to that of the signal reflected back from the target. The plurality of phase noise signals may represent phase noise signals occurring at a target located at a plurality of distances from the FMCW LIDAR system corresponding to integer numbers of the preset distance corresponding to the preset delay. However, the target may not necessarily be at a distance corresponding to an integer number of the preset distance, but may be somewhere in between. However, by the ability to tune the preset delay, and thus the preset distance, a closer match to the target distance may be made.

According to an embodiment, the detector is a balanced photodiode.

By a balanced photodiode is here meant a device comprising two photodiodes connected in series. When the two photodiodes detect the same level of light, i.e. when their generated electric signals are equal, their electric signals cancel each other out. By way of example, one of the photodiodes may be driven by a direct current whereas the other photodiode may be driven by an inverse current. By the present arrangement, detection of small differences in light level on the two photodiodes may be provided.

However, the detector may alternatively be of a different type. By way of example, the detector may alternatively be an unbalanced photodiode or an IQ optical receiver.

According to an embodiment, the device further comprises an analog-to-digital converter, ADC, configured to convert the detected signal from the detector, from an analog detected signal to a digital detected signal, and to send the digital detected signal to the phase noise determination module.

According to an embodiment, the device further comprises a transimpedance amplifier, TIA, configured to amplify the detected signal from the detector, and to send the amplified signal to the ADC.

According to a third aspect there is provided a method for phase noise compensation for a frequency modulated continuous wave, FMCW, light detection and ranging, LIDAR, system, said method comprising:

receiving, by an optical interferometer, a light signal, wherein the light signal is a FMCW light signal generated by a source of the FMCW LIDAR system;

splitting, by the optical interferometer, the light signal into a first light signal propagating in a first path and a second light signal propagating in a second path, wherein the first path has a preset delay in relation to the second path, wherein the preset delay corresponds to delay caused by propagation of a preset distance;

combining, by the optical interferometer, the first and the second light signals having passed the first and the second path, respectively;

detecting, by a detector, the combined first and second light signals;

receiving, by a phase noise determination module, a detected signal from the detector;

determining, by the phase noise determination module, a plurality of phase noise signals corresponding to phase noise signals of integer numbers of the preset delay;

receiving, by a phase noise compensation module, a LIDAR response signal;

processing, by the phase noise compensation module, the LIDAR response signal by:

compensating phase noise in the LIDAR response signal using the plurality of phase noise signals to form a combined compensated LIDAR response signal; and

determining a fast Fourier transform, FFT, of the combined compensated LIDAR response signal for a range of distances to the target encompassing all distances corresponding to the integer numbers of the preset delay.

According to an embodiment, the processing further comprises processing the LIDAR response signal in a plurality of branches by:

compensating, for each branch, phase noise in the LIDAR response signal using one of the plurality of phase noise signals; and

adding the compensated LIDAR response signals together to form the combined compensated LIDAR response signal.

According to an embodiment, the processing further comprises:

adding the plurality of phase noise signals together to form a combined phase noise signal, and

compensating phase noise in the LIDAR response signal using the combined phase noise signal to form the combined compensated LIDAR response signal.

Effects and features of the second and third aspects are largely analogous to those described above in connection with the first aspect. Embodiments mentioned in relation to the first aspect are largely compatible with the second and third aspects. It is further noted that the disclosure relates to all possible combinations of features unless explicitly stated otherwise.

Other objectives, features and advantages of the present disclosure will appear from the following detailed description, from the attached claims as well as from the drawings.

Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.

Fig. 1 illustrates a frequency modulated continuous wave, FMCW, light detection and ranging, LIDAR, system, comprising a device for phase noise compensation.

Fig. 2 illustrates a block diagram of the functions of the phase noise determination module.

Fig. 3A illustrates a block diagram of the functions of the phase noise compensation module.

Fig. 3B illustrates a block diagram of alternative functions of the phase noise compensation module 150.

Fig. 4 illustrates data, compensated and un-compensated for phase noise respectively, of a beat signal in the frequency domain obtained with three targets in front of the LIDAR system.

Fig. 5 illustrates a schematic block diagram shortly summarizing the method for phase noise compensation for a frequency modulated continuous wave, FMCW, light detection and ranging, LIDAR, system.

Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

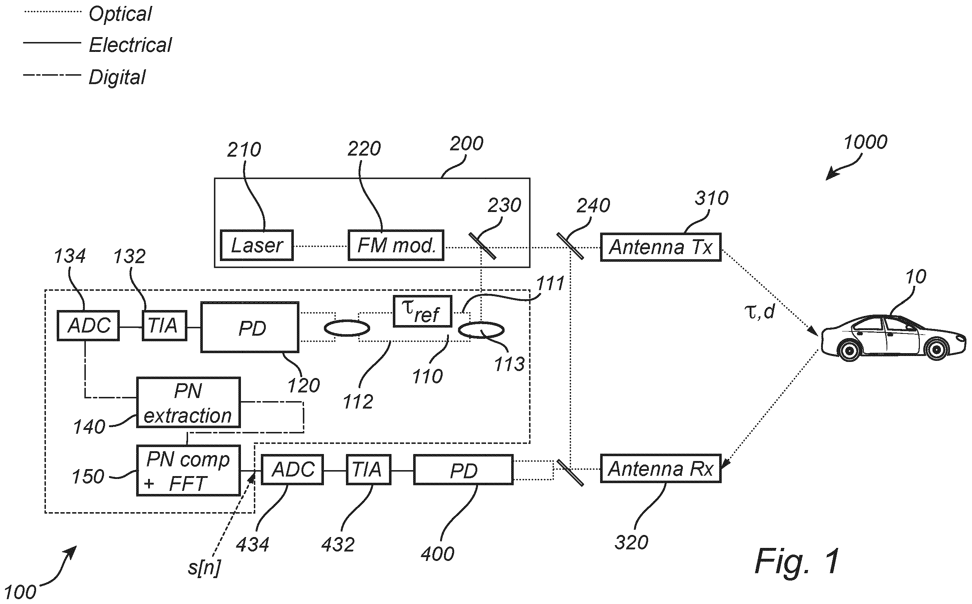

Fig. 1 illustrates a frequency modulated continuous wave (FMCW) light detection and ranging (LIDAR) system 1000.

The LIDAR system 1000 comprises a source 200 configured to generate light for the LIDAR system 1000. In that respect, the source 200 comprises a laser 210. The laser 210 is configured to generate an optical carrier signal in the form of laser light at a wavelength $\lambda$. To provide frequency modulation of the optical carrier signal, the source 200 further comprises a frequency modulation module 220. In the present example, the frequency modulation module 220 may be external to the laser 210, such that the frequency modulation may be performed on the laser light output from the laser 210. However, the frequency modulation module 220 may alternatively form part of the laser 210, such that the frequency modulation may be performed within the laser 210.

The LIDAR system 1000 may further comprise an optical beam splitter 230 arranged in a path of the modulated optical carrier signal. The optical beam splitter 230 may split the modulated optical carrier signal into a LIDAR emission signal and a light signal. The light signal may be sent to a device 100 for phase noise compensation, the details of which will be discussed later.

The LIDAR emission signal is to be emitted from the LIDAR system 1000. However, prior to the LIDAR emission signal being emitted, a small portion of the LIDAR emission signal may be split off from the LIDAR emission signal, by means of another optical beam splitter 240. The portion being split off may be referred to as a local oscillator signal.

The LIDAR emission signal may subsequently be emitted from the LIDAR system 1000 for example by a transmitter antenna 310, towards a target 10. In case the LIDAR emission signal reaches the target 10, at least some of the LIDAR emission signal may be reflected back towards the LIDAR system 1000. The two-way target delay and one-way target distance from the LIDAR system 1000 are here denoted $\tau$ and $d$, respectively. The relation between $\tau$ and $d$ may be written as:

$$\tau = \frac{2 \cdot d}{c}, \qquad (1)$$

where c is the speed of the light in the vacuum. The frequency of the modulated optical carrier signal may go from a minimum wavelength ($\lambda_{min}$) to a maximum wavelength ($\lambda_{max}$) during the up-ramp and in the opposite way during the down-ramp. The frequency separation between $\lambda_{min}$ and $\lambda_{max}$ determines the bandwidth of the modulated optical carrier signal or, in other words, the excursion frequency $f_{exc}$. The excursion frequency of the LIDAR systems 1000 is related to the ranging resolution $\Delta R$ according to:

$$\Delta R = \frac{0.89 \cdot c}{f_{exc}}. \qquad (2)$$

The signal being reflected back may be received by a receiver antenna 320 of the LIDAR system 1000. The LIDAR system 1000 further comprises a LIDAR detector 400. In the present example, the LIDAR detector 400 may be a balanced photodiode, however it should be understood that the LIDAR detector 400 may alternatively be another type of detector. The received reflected signal and the local oscillator signal may be combined on the LIDAR detector 400, thereby forming a beat frequency. The resulting electrical signal from the LIDAR detector 400, i.e. the LIDAR response signal, may be expressed as:

$$i_{PD-out}(t) = \sqrt{P_{LO}P_{Rx}} \cdot sin(2 \cdot \pi \cdot f_{beat}t + \Delta\varphi(t, \tau)), \qquad (3)$$

where $P_{LO}$ and $P_{rx}$ are the powers of the local oscillator signal and the received reflected signal, respectively. The beat frequency $f_{beat}$ may be expressed as:

$$f_{beat} = \frac{f_{exc} \cdot \tau}{T_{chirp}}, \qquad (4)$$

where $T_{chirp}$ is the time duration of each down- and up-ramp of the frequency modulation. Thus, the distance d of the target 10 may be estimated as:

$$\hat{d} = \frac{c \cdot \widehat{f_{beat}} \cdot T_{chirp}}{2 \cdot f_{exc}}. \qquad (5)$$

It should be noted in equation (3) that there is an additional term, $\Delta\varphi(t, \tau)$, in the argument of the sine. $\Delta\varphi(t, \tau)$ indicates the phase noise difference between the original phase noise of the local oscillator signal and the delayed phase noise of the signal reflected of the target 10. The phase noise difference term $\Delta\varphi(t, \tau)$ varies with time and may be expressed as:

$$\Delta\varphi(t,\tau) = \varphi(t) - \varphi(t,\tau), \tag{6}$$

where $\varphi(t)$ and $\varphi(t,\tau)$ refer to the phase noise of the local oscillator signal and the delayed phase noise of the signal reflected of the target 10, respectively.

In case $P_{LO}$ is large enough and the phase noise is null, the shot noise results the most dominant noise in the output of the LIDAR detector 400 ($i_{PD\text{-}out}(t)$). Thus, after having performed a fast Fourier transform (FFT) of the detected signal, the signal-to-noise ratio (SNR) is mainly limited by shot noise and can be expressed as:

$$SNR_{after-FFT} \approx \frac{Resp \cdot P_{Rx} \cdot T_{chirp}}{2 \cdot e}, \tag{7}$$

where *Resp* and *e* are the responsivity of the photodiode in Ampere/Watt and the fundamental unit of charge in Coulomb, respectively.

However, in the presence of phase noise, equation (7) may not be valid. By way of example, phase noise of the modulated optical carrier signal produced by the source 200 may have different sources, such as current noise from the laser driver, temperature fluctuations, noise in the modulation signal, and/or laser linewidth.

To determine the signal degradations caused by phase noise, the power spectrum density (PSD) of equation (6) may be analyzed. Assuming that the phase noise is only caused by the laser linewidth and that <p(t) follows a Wiener process with Lorentzian spectrum, the PSD of $\Delta\varphi(t,\tau)$ may be expressed as:

$$S(\omega,\ \tau,\ T) = T sinc^2\left(\frac{T\omega}{2}\right) e^{\frac{-2\tau}{\tau_c}} \tag{8}$$
$$+ \frac{\tau_c}{1 + \left(\frac{\omega\tau_c}{2}\right)^2} \left\{ 1 - e^{\frac{-2\tau}{\tau_c}} \left[ cos(\omega\tau) + \frac{2}{\omega\tau_c} sin(\omega\tau) \right] \right\},$$

where $\tau_c$ is defined as the coherence time and is equal to $2/\Delta\omega$, with $\Delta\omega$ being the full-width at half-maximum (FWHM) of the laser or, in other words, the effective linewidth of the laser. The term $T$ of equation (8) corresponds to the time duration of $\Delta\varphi$ $(t,\tau)$ when performing the FFT. Hence, when $T$ is large enough, the term $T sinc^2\left(\frac{T\omega}{2}\right)$ of equation (8) can be approximated as a Dirac delta function.

It serves to mention that there are two effects of phase noise in FMCW LIDAR sensors. Firstly, phase noise may cause SNR reduction for each target detection, individually. This effect may be determined by the first distinguishable term of equation (8). Secondly, phase noise may cause phase noise interference between signals from different targets. This effect may be determined by the second distinguishable term of equation (8).

It should be noted that the spectrum of the differential phase noise expressed by equation (8) varies with $\tau$. Moreover, as mentioned above, equation (8) comprises two distinguishable terms. The first term indicates the beat signal while the second one refers to the phase noise pedestal. Neglecting the second term and assuming T tending to infinite, the beat signal level may be determined by the factor $e^{\frac{-2\tau}{\tau_c}}$. Thus, the power level of the beat signal is inversely proportional to $\Delta\omega$ and $\tau$. Put differently, the beat signal power is lower for higher linewidth of the laser and larger target distances. Then, in FMCW LIDAR systems under phase noise conditions, the SNR is not only limited by shot noise and thus equation (7) may be extended to:

$$SNR'_{after-FFT} \approx \frac{Resp \cdot P_{Rx} \cdot T_{chirp}}{2 \cdot e + Resp \cdot P_{Rx} \cdot \tau_c \left[ 1 - e^{\frac{-2\tau}{\tau_c}} \cdot \left( 1 + \frac{2\tau}{\tau_c} \right) \right]} \cdot e^{\frac{-2\tau}{\tau_c}}. \tag{9}$$

Thus, in case the local oscillator power is large enough, the SNR level after the FFT process is limited by the shot noise and the phase noise. It should be understood that the range measuring capability of LIDAR systems may be significantly reduced due to the phase noise. Thus, phase noise compensation to mitigate the two phase noise effects is advantageous.

Therefore, in order to compensate for the effects of phase noise, the LIDAR system 1000 further comprises a device 100 for phase noise compensation. The LIDAR system 1000 is configured to provide the light signal, split off from the modulated optical carrier signal by the beam splitter 230, to the device 100 for phase noise compensation. The device 100 comprises an optical interferometer 110 configured to receive the light signal. The light signal is split into a first light signal propagating in a first path 111 and a second light signal propagating in a second path 112. By way of example, the light signal may be split by an optical beam splitter 113, but the light signal may alternatively be split also in other manners. The first path 111 has a preset delay $\tau_{ref}$ in relation to the second path 112. The preset delay corresponds to delay caused by propagation of a preset distance. The preset delay is a known value. In the present example, the preset delay is a fixed preset delay. However, the preset delay may alternatively be tunable.

After having passed the first 111 and the second 112 paths respectively, the first and the second light signals may be combined again. The resulting combined signal may form a beat frequency which is linked to the preset delay of the optical interferometer.

The device 100 further comprises a detector 120. In the present example, the detector 120 may be a balanced photodiode. However, it should be realized that the detector 120 may alternatively be a different type of detector, such as an unbalanced photodiode or an IQ optical receiver. The detector 120 is arranged to receive the combined first and second light signals from the optical interferometer 110. In this manner, the detector 120 may detect the resulting beat frequency caused by the first and second light signals. Subsequently, the electrical output signal of the detector 120 may be amplified with a transimpedance amplifier 132, TIA, and sampled with an analog-to-digital converter 134, ADC. It should be realized that, in case the detector 120 is an IQ optical receiver, a set of two TIAs and two ADCs may be required.

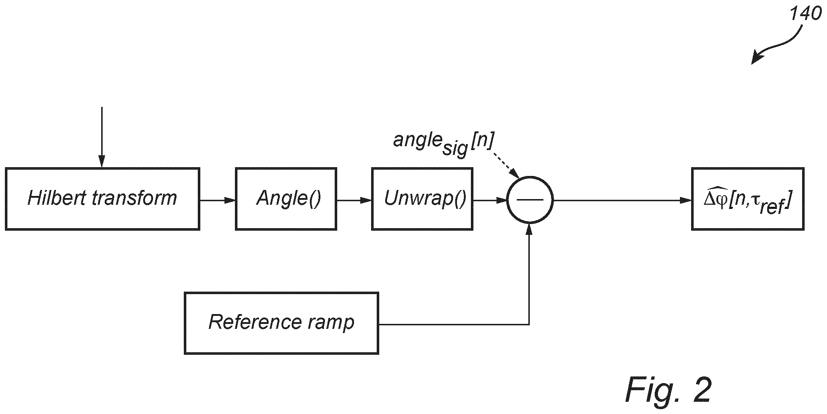

The device 100 further comprises a phase noise determination module 140. The phase noise determination module 140 is configured to receive the detected signal from the detector 120, after the signal has been digitized by the ADC. The phase noise determination module 140 is further configured to determine a plurality of phase noise signals corresponding to integer numbers of the preset delay, and thus corresponding to the phase noise occurring at different distances. In the present example, the integer numbers determining the plurality of phase noise signals are evenly distributed. However, it serves to mention that the integer numbers determining the plurality of phase noise signals may alternatively be non-evenly distributed. The details of the phase noise determination module 140 will be described in relation to Fig. 2.

The device 100 further comprises a phase noise compensation module 150. The phase noise compensation module 150 is configured to receive the LIDAR response signal s[n] from the LIDAR detector 400. In the present example, the LIDAR response signal from the LIDAR detector 400 may first be amplified with a transimpedance amplifier 432, TIA, and sampled with an analog-to-digital converter 434, ADC, prior to being provided to the phase noise compensation module 150. The phase noise compensation module 150 is configured to process the LIDAR response signal by compensating phase noise in the LIDAR response signal using the plurality of phase noise signals to form a combined compensated LIDAR response signal. Further, the phase noise compensation module 150 is configured to determine a fast Fourier transform, FFT, of the combined compensated LIDAR response signal for a range of distances to the target encompassing all distances corresponding to the integer numbers of the preset delay.

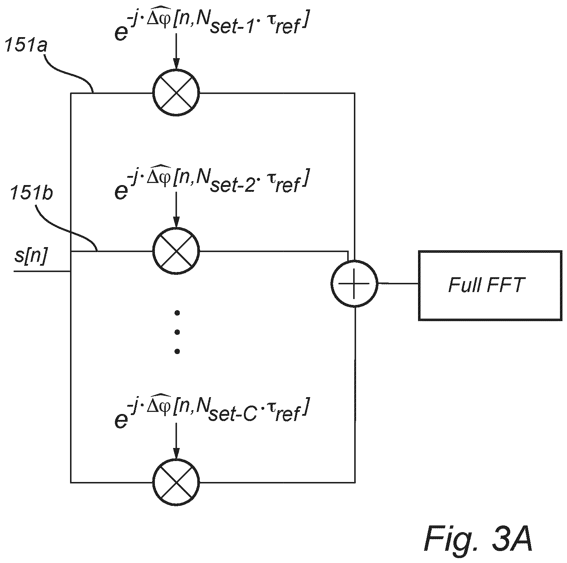

The details of the phase noise compensation module 150 will be described in relation to Figs 3A-3B.

Fig. 2 illustrates a block diagram of the functions of the phase noise determination module 140.

The digitized signal from the detector (not shown here) may be employed to extract the phase noise signal related to $\tau_{ref}$ for a determined time period. This phase noise signal may correspond to the phase noise of a light signal propagating a preset distance, thus being delayed by the preset delay. In order to properly compensate the phase noise of the LIDAR response signal, the ADC of the device 100 for phase noise compensation and the ADC of the LIDAR detector 400 should be triggered simultaneously.

As illustrated in Fig. 2, a Hilbert transform may optionally be applied to the digitized detected signal of the phase noise compensation device. An angle operation may then be used on the resulting complex signal, to extract a phase angle ramp of the detected signal. It serves to mention that the Hilbert transform may optionally be omitted. Given as a non-limiting example, the Hilbert transform may be omitted in case an IQ optical receiver is used as the detector.

Subsequently, on a condition that a phase difference between a phase angle of the phase angle ramp and a consecutive phase angle of the phase angle ramp is larger than or equal to $2\pi$, a multiple of $2\pi$ is added to the consecutive phase angle of the phase angle ramp. The operation may be referred to as an "unwrap" operation, and is carried out in the angle signal in order to avoid $2\pi$ radians or 360° jumps.

Once the phase angle ramp is unwrapped, a reference phase angle ramp is subtracted from the extracted phase angle ramp. The slope of the reference phase angle ramp is determined by the preset delay. In the up-ramp, the reference phase angle ramp is linear, where the initial value is the first value of the unwrapped phase angle ramp ($Ph_{init\text{-}up}$), while the last value is equal to $Ph_{init\text{-}up} + Ph_{ampl}$. $Ph_{ampl}$ may be calculated as:

$$Ph_{ampl}[rad] = 2\pi \cdot \tau_{ref} \cdot f_{exc} \qquad (10)$$

For the down-ramp, the reference phase angle ramp goes from $Ph_{init\text{-}down} + Ph_{ampl}$ to $Ph_{init\text{-}down}$, where $Ph_{init\text{-}down}$ is the first value of the unwrapped phase angle ramp for the down-ramp. After subtraction of the reference phase angle ramp the phase noise signal $\widehat{\Delta\varphi}[n, \tau_{ref}]$ corresponding to the preset delay $\tau_{ref}$ is determined.

It should be realized that the phase noise determination module is not limited to this approach in order to extract the phase noise signal from the detected signal. For example, the phase noise determination module may employ frequency down-conversion in combination with low-pass filtering as an alternative to subtraction of a reference phase angle ramp.

Once this phase noise signal $\widehat{\Delta\varphi}[n, \tau_{ref}]$ has been determined, the rest of the plurality of phase noise signals corresponding to integer numbers of the preset delay, and thus of the preset distance $d_{ref}$, may be determined. The phase noise signals associated with delays of $m \cdot \tau_{ref}$ (m is an integer number) may be determined by the following equation:

$$\widehat{\Delta\varphi}[n, m \cdot \tau_{ref}] = \begin{cases} \displaystyle\sum_{p=0}^{m-1} \widehat{\Delta\varphi}[n - p\tau_{ref}, \tau_{ref}], & m \geq 1; \\ 0, & m = 0. \end{cases} \qquad (11)$$

It should be realized from equation (11) that $\widehat{\Delta\varphi}[n, \tau_{ref}]$ is delayed with respect to $\tau_{ref}$. To reduce the complexity of this delayed process, the sampling rate of the ADC in the phase noise compensation device 100 of Fig. 1 should preferably to be multiple a of $1/\tau_{ref}$. Otherwise, a more complex digital signal processing may be required.

Assuming that the sampling rate of the ADC for the LIDAR response signal is directly related to the maximum distance to measure $(\frac{f_{s-ADC-target}}{2} = f_{beat-max})$, the number of phase noise signals $\widehat{\Delta\varphi}[n, m \cdot \tau_{ref}]$ to calculate may be written as:

$$N_{step} = \frac{d_{max}}{d_{ref}}, \qquad (12)$$

where $d_{ref} = c/\tau_{ref}$. Since equation (11) is an accumulative operation, the next $\widehat{\Delta\varphi}[n, m \cdot \tau_{ref}]$ signal may be determined from the previous phase noise signal $\widehat{\Delta\varphi}[n, (m-1) \cdot \tau_{ref}]$ plus $\widehat{\Delta\varphi}[n - m\tau_{ref}, \tau_{ref}]$. Hence, once all the $N_{step}$ phase noise signals corresponding to $m \cdot d_{ref}$ ($m \in [1, N_{step}]$) have been determined for a specific up and down-ramp period, the phase noise compensation module may perform phase noise compensation of the LIDAR response signal.

It serves to mention that the phase noise determination module is not necessarily limited to determining the plurality of phase noise signals such that the plurality of phase noise signals corresponds to only integer numbers of the preset delay. Optionally, the phase noise determination module may be configured to determine the plurality of phase noise signals to further comprise phase noise signals corresponding to non-integer numbers of the preset delay, in addition to the integer numbers. In such a case, a modified version of equation (11) may be required. Modifications of equation (11) may be provided in a number of different manners. Therefore, given only as a non-limiting example, the phase noise signals corresponding to non-integer as well as integer numbers of the preset delay, may be determined by:

$$\widehat{\Delta\varphi}[n, m \cdot \tau_{ref}] \qquad (11b)$$
$$= (m - \lfloor m \rfloor)\widehat{\Delta\varphi}[n - \lfloor m \rfloor\tau_{ref}, \tau_{ref}]$$
$$+ \sum_{p=0}^{\lfloor m \rfloor - 1} \widehat{\Delta\varphi}[n - p\tau_{ref}, \tau_{ref}]$$

where m is now an integer or non-integer number, and $\lfloor m \rfloor$ is the integer part of m. Thus, $m - \lfloor m \rfloor$ corresponds to fractional rest of m after subtraction of the integer part $\lfloor m \rfloor$.

Fig. 3A illustrates a block diagram of the functions of the phase noise compensation module 150.

As previously mentioned, a set of pre-selected distances may be determined, corresponding to integer numbers of the preset distance, and thus to the preset delay. The plurality of phase noise signals $\widehat{\Delta\varphi}[n, \, m \cdot \tau_{ref}]$ may be determined for these pre-selected distances.

First, the phase noise compensation module 150 receives the LIDAR response signal s[n], detected by the LIDAR detector.

The processing of the LIDAR response signal is then split up into branches 151a, 151b, and in the present example C number of branches, $N_{sel-1}$, $N_{sel-2}$, ... $N_{sel-C}$. Each branch 151a, 151b aims at compensating the phase noise associated with a specific distance m · $dr_{ef}$ of the pre-selected distances. It should be realized that the C number of branches may be all the $N_{step}$ branches, however they may alternatively be a smaller selection of the $N_{step}$ branches.

For each branch, the phase noise compensation module is configured to compensate phase noise in the LIDAR response signal using one of the plurality of phase noise signals. The phase noise compensation in the branches is based on the multiplication of s[n] with an exponential complex whose argument is the negative of the determined phase noise signals $\widehat{\Delta\varphi}[n, \, m \cdot \tau_{ref}]$. In this manner, a phase noise compensation is realized in the time-domain. It serves to mention that the complex exponential may have opposite signs for an up-ramp and a down-ramp, respectively. By way of example, the complex exponential may be negative for an up-ramp and positive for a down-ramp.

It should be realized that in case the plurality of phase noise signals corresponds to only integer numbers of the preset delay, the different phase noise signals used to compensate the LIDAR response signal for in the respective branches are provided by equation (11). However, in case the plurality of phase noise signals corresponds to integer as well as non-integer numbers of the preset delay, the different phase noise signals used to compensate the LIDAR response signal for in the respective branches may be provided in a different manner. For example, the phase noise signals may then be provided by equation (11b).

Subsequently, the compensated LIDAR response signals from each of the branches 151a, 151b may be added together to form a combined compensated LIDAR response signal. The combined compensated LIDAR response signal may be expressed by:

$$s[n] \cdot e^{-j \cdot \widehat{\Delta\varphi}[n, \, N_{sel-1}\tau_{ref}]} + \cdots + s[n] \cdot e^{-j \cdot \widehat{\Delta\varphi}[n, \, N_{sel-C}\cdot\tau_{ref}]} \qquad (13)$$

Finally, the phase noise compensation module may determine a fast Fourier transform, FFT, of the combined compensated LIDAR response signal for a range of distances to the target encompassing all distances corresponding to the integer numbers of the preset delay. In this manner, the FFT of the phase noise compensates LIDAR signal may be performed in a single FFT step, allowing the complexity of the digital signal processing to be significantly reduced. It should be realized that this phase noise compensation method may be determined in the up and down-ramp beat signal, independently. Thus, with the phase noise compensation of the present disclosure, the SNR reduction caused by phase noise may be mitigated or even eliminated.

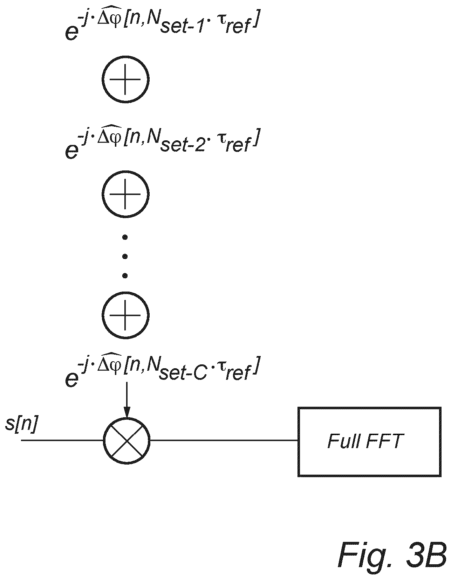

Fig. 3B illustrates a block diagram of alternative functions of the phase noise compensation module 150.

The phase noise compensation module 150 receives the LIDAR response signal s[n], detected by the LIDAR detector. However, instead of dividing the processing into separate branches, the phase noise compensation module may alternatively add all of the plurality of phase noise signals together to form a combined phase noise signal. The combined phase noise signal may be expressed by:

$$e^{-j \cdot \widehat{\Delta\varphi}[n, \, N_{sel-1}\cdot\tau_{ref}]} + e^{-j \cdot \widehat{\Delta\varphi}[n, \, N_{sel-2}\cdot\tau_{ref}]} + \cdots + e^{-j \cdot \widehat{\Delta\varphi}[n, \, N_{sel-C}\cdot\tau_{ref}]} \qquad (14)$$

Once the combined phase noise signal is formed, the combined phase noise signal may be used for compensating phase noise in the LIDAR response signal, thereby forming the combined compensated LIDAR response signal. The phase noise compensation is based on multiplication, and the combined compensated LIDAR signal may be expressed as:

$$s[n] \cdot \left( e^{-j \cdot \widehat{\Delta\varphi}[n, \, N_{sel-1}\cdot\tau_{ref}]} + \cdots + e^{-j \cdot \widehat{\Delta\varphi}[n, \, N_{sel-C}\cdot\tau_{ref}]} \right) \qquad (15)$$

By the present arrangement, the LIDAR response signal is compensated for all of the plurality of phase noise signals by a single compensation operation. In this manner, the computational complexity may be further reduced. Moreover, with the phase noise compensation of the present disclosure, the SNR reduction caused by phase noise may be mitigated or even eliminated.

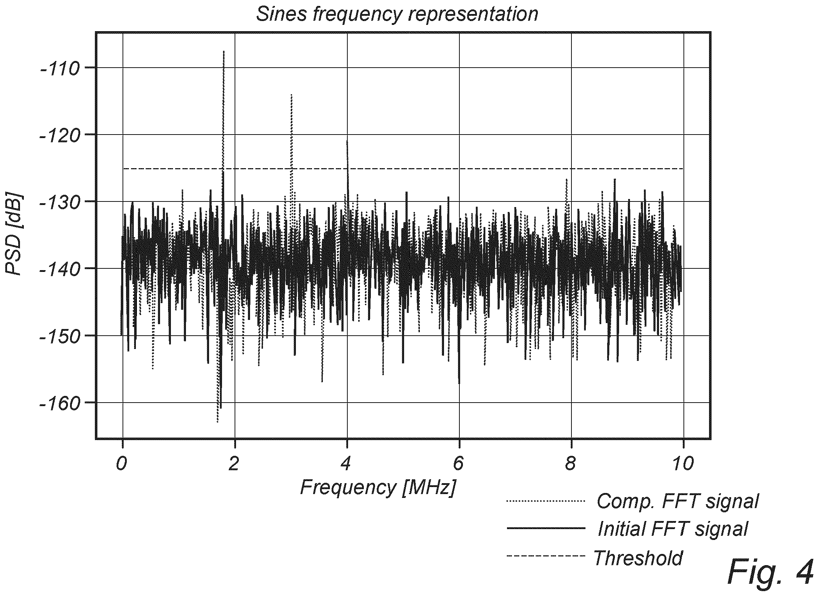

Fig. 4 illustrates a beat signal in the frequency domain obtained with three targets in front of the LIDAR system. In the present example, the targets are located at distances 9, 15, and 20 meters, respectively. The laser linewidth in the present example is 10 MHz.

The solid curve corresponds to the power spectrum density, PSD, of the FFT signal without having applied any phase noise compensation. The dotted curve corresponds to the power spectrum density, PSD, of the FFT signal where the signal has been compensated for the phase noise associated with each of the target distances.

The improvement of the dotted curve with respect to the solid curve is clearly noticeable. The three peaks in the dotted curve are clearer and overcome the threshold marked by the dashed line. The graph of Fig. 4 highlights the importance of phase noise compensation to mitigate or even eliminate the SNR reduction caused by phase noise.

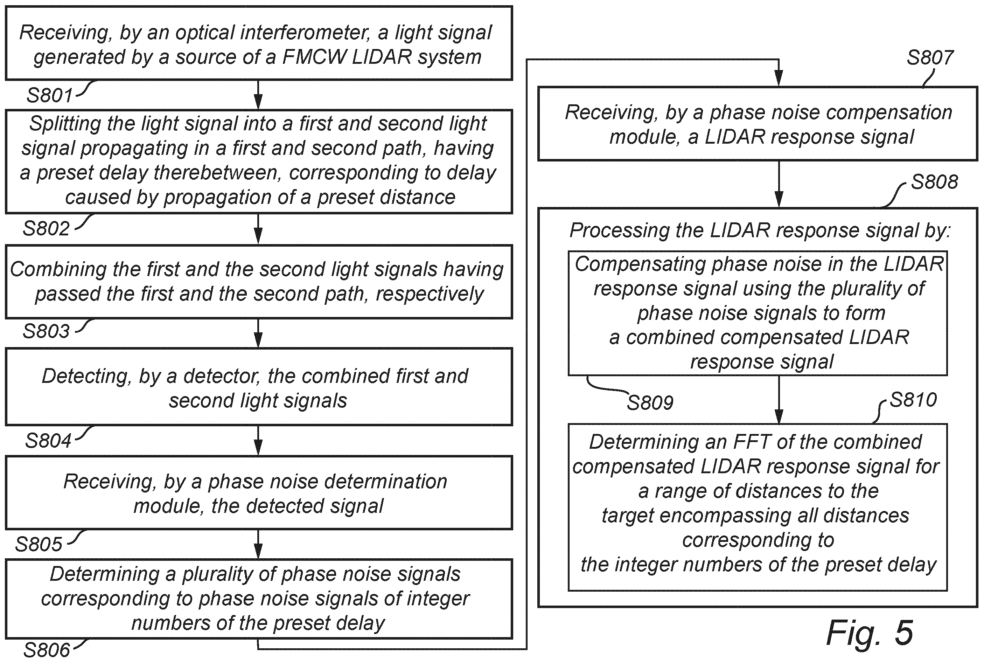

Fig. 5 illustrates a schematic block diagram shortly summarizing the method for phase noise compensation for a frequency modulated continuous wave, FMCW, light detection and ranging, LIDAR, system. It should be understood that the steps of the method, although listed in a specific order herein, may be performed in any order suitable.

The method may comprise receiving S801, by an optical interferometer, a light signal, wherein the light signal is a FMCW light signal generated by a source of the FMCW LIDAR system.

The method may comprise splitting S802, splitting, by the optical interferometer, the light signal into a first light signal propagating in a first path and a second light signal propagating in a second path, wherein the first path has a preset delay in relation to the second path, wherein the preset delay corresponds to delay caused by propagation of a preset distance.

The method may comprise combining S803, by the optical interferometer, the first and the second light signals having passed the first and the second path, respectively.

The method may comprise detecting S804, by a detector, the combined first and second light signals.

The method may comprise receiving S805, by a phase noise determination module, a detected signal from the detector.

The method may comprise determining S806, by the phase noise determination module, a plurality of phase noise signals corresponding to phase noise signals of integer numbers of the preset delay.

The method may comprise receiving S807, by a phase noise compensation module, a LIDAR response signal.

The method may comprise processing S808, by the phase noise compensation module, the LIDAR response signal by:

compensating S809 phase noise in the LIDAR response signal using the plurality of phase noise signals to form a combined compensated LIDAR response signal; and

determining S810 a fast Fourier transform, FFT, of the combined compensated LIDAR response signal for a range of distances to the target encompassing all distances corresponding to the integer numbers of the preset delay.

The processing may further comprise processing the LIDAR response signal in a plurality of branches by:

compensating, for each branch, phase noise in the LIDAR response signal using one of the plurality of phase noise signals; and

adding the compensated LIDAR response signals together to form the combined compensated LIDAR response signal.

The processing further comprises:

adding the plurality of phase noise signals together to form a combined phase noise signal, and

compensating phase noise in the LIDAR response signal using the combined phase noise signal to form the combined compensated LIDAR response signal.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A device for phase noise compensation for a frequency modulated continuous wave, FMCW, light detection and ranging, LIDAR, system, said device comprising:

an optical interferometer configured to receive a light signal, wherein the light signal is a FMCW light signal generated by a source of the FMCW LIDAR system, wherein the optical interferometer is configured to split the light signal into a first light signal propagating in a first path and a second light signal propagating in a second path, wherein the first path has a preset delay in relation to the second path, wherein the preset delay corresponds to delay caused by propagation of a preset distance, and to combine the first and the second light signals having passed the first and the second path, respectively,

a detector for detecting the combined first and second light signals;

a phase noise determination module configured to receive a detected signal from the detector and to determine a plurality of phase noise signals corresponding to phase noise signals of integer numbers of the preset delay; and

a phase noise compensation module configured to receive a LIDAR response signal, and to process the LIDAR response signal by compensating phase noise in the LIDAR response signal using the plurality of phase noise signals to form a combined compensated LIDAR response signal, and to determine a fast Fourier transform, FFT, of the combined compensated LIDAR response signal for a range of distances to the target encompassing all distances corresponding to the integer numbers of the preset delay.

2. The device according to claim 1, wherein the phase noise compensation module is configured to process the LIDAR response signal in a plurality of branches, wherein the phase noise compensation module is configured to compensate, for each branch, phase noise in the LIDAR response signal using one of the plurality of phase noise signals, and wherein the phase noise compensation module is further configured to add the compensated LIDAR response signals together to form the combined compensated LIDAR response signal.

3. The device according to claim 1, wherein the phase noise compensation module is configured to process the LIDAR response signal by adding the plurality of phase noise signals together to form a combined phase noise signal, and wherein the phase noise compensation module is further configured to compensate phase noise in the LIDAR response signal using the combined phase noise signal to form the combined compensated LIDAR response signal.

4. The device according to any one of the preceding claims, wherein the integer numbers determining the plurality of phase noise signals are evenly distributed.

5. The device according to any one of the preceding claims, wherein the phase noise determination module is further configured to:

extract a phase angle ramp of the detected signal,

on a condition that a phase difference between a phase angle of the phase angle ramp and a consecutive phase angle of the phase angle ramp is larger than or equal to $2\pi$, add a multiple of $2\pi$ to the consecutive phase angle of the phase angle ramp, and

subtract a reference phase angle ramp from the extracted phase angle ramp, wherein a slope of the reference phase angle ramp is determined by the preset delay, to determine a phase noise signal of a plurality of phase noise signals, corresponding to the preset delay.

6. The device according to any one of the preceding claims, wherein the preset delay of the first path in relation to the second path is any one of a fixed preset delay or a tunable preset delay.

7. The device according to any one of the preceding claims, wherein the phase noise determination module is further configured to determine the plurality of phase noise signals to further comprise phase noise signals corresponding to non-integer numbers of the preset delay.

8. The device according to any one of the preceding claims, wherein the detector is a balanced photodiode.

9. A frequency modulated continuous wave, FMCW, light detection and ranging, LIDAR, system comprising:

the device for phase noise compensation according to any one of the preceding claims;
a source configured to generate the light signal, said source comprising:

a laser configured to generate an optical carrier signal;
a frequency modulation module configured to modulate a frequency of the optical carrier signal; and
an optical beam splitter arranged in a path of the modulated optical carrier signal, and configured to split the modulated optical carrier signal into a LIDAR emission signal being emitted from the FMCW LIDAR system, and the light signal being sent to the optical interferometer of the device for phase noise compensation; and

a LIDAR detector configured to detect light from the LIDAR emission signal being reflected back towards the FMCW LIDAR system, to detect the LIDAR response signal.

10. A method for phase noise compensation for a frequency modulated continuous wave, FMCW, light detection and ranging, LIDAR, system, said method comprising:

receiving, by an optical interferometer, a light signal, wherein the light signal is a FMCW light signal generated by a source of the FMCW LIDAR system;

splitting, by the optical interferometer, the light signal into a first light signal propagating in a first path and a second light signal propagating in a second path, wherein the first path has a preset delay in relation to the second path, wherein the preset delay corresponds to delay caused by propagation of a preset distance;

combining, by the optical interferometer, the first and the second light signals having passed the first and the second path, respectively;

detecting, by a detector, the combined first and second light signals;

receiving, by a phase noise determination module, a detected signal from the detector;

determining, by the phase noise determination module, a plurality of phase noise signals corresponding to phase noise signals of integer numbers of the preset delay;

receiving, by a phase noise compensation module, a LIDAR response signal;

processing, by the phase noise compensation module, the LIDAR response signal by:

compensating phase noise in the LIDAR response signal using the plurality of phase noise signals to form a combined compensated LIDAR response signal; and

determining a fast Fourier transform, FFT, of the combined compensated LIDAR response signal for a range of distances to the target encompassing all distances corresponding to the integer numbers of the preset delay.

11. The method according to claim 10, wherein the processing further comprises processing the LIDAR response signal in a plurality of branches by:

compensating, for each branch, phase noise in the LIDAR response signal using one of the plurality of phase noise signals; and

adding the compensated LIDAR response signals together to form the combined compensated LIDAR response signal.

12. The method according to claim 10, wherein the processing further comprises:

adding the plurality of phase noise signals together to form a combined phase noise signal, and compensating phase noise in the LIDAR response signal using the combined phase noise signal to form the combined compensated LIDAR response signal.

Fig. 1

*Fig. 2*

Fig. 3A

$$e^{-j \cdot \widehat{\Delta\varphi}[n, N_{set-1} \cdot \tau_{ref}]}$$

$$e^{-j \cdot \widehat{\Delta\varphi}[n, N_{set-2} \cdot \tau_{ref}]}$$

$$e^{-j \cdot \widehat{\Delta\varphi}[n, N_{set-C} \cdot \tau_{ref}]}$$

$s[n]$

Full FFT

*Fig. 3B*

Sines frequency representation

EP 4 760 346 A1

........... Comp. FFT signal

———— Initial FFT signal

-  -  -  -  - Threshold

*Fig. 4*

Receiving, by an optical interferometer, a light signal generated by a source of a FMCW LIDAR system

S801

Splitting the light signal into a first and second light signal propagating in a first and second path, having a preset delay therebetween, corresponding to delay caused by propagation of a preset distance

S802

Combining the first and the second light signals having passed the first and the second path, respectively

S803

Detecting, by a detector, the combined first and second light signals

S804

Receiving, by a phase noise determination module, the detected signal

S805

Determining a plurality of phase noise signals corresponding to phase noise signals of integer numbers of the preset delay

S806

S807

Receiving, by a phase noise compensation module, a LIDAR response signal

S808

Processing the LIDAR response signal by:

Compensating phase noise in the LIDAR response signal using the plurality of phase noise signals to form a combined compensated LIDAR response signal

S809

Determining an FFT of the combined compensated LIDAR response signal for a range of distances to the target encompassing all distances corresponding to the integer numbers of the preset delay

S810

Fig. 5

EP 4 760 346 A1

Europäisches Patentamt
European Patent Office
Office européen des brevets

# EUROPEAN SEARCH REPORT

**Application Number**

EP 24 21 9380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 167 440 A (HANGZHOU OPTICAL SEMICONDUCTOR SCIENCE AND TECH LIMITED COMPANY) 11 March 2022 (2022-03-11) * the whole document * | 1-12 | INV. G01S7/497 G01S17/34 G01S7/4911 G01S7/4912 |
| A | US 2016/161601 A1 (SEBASTIAN RICHARD L [US] ET AL) 9 June 2016 (2016-06-09) * paragraph [0039] * | 5 | |
| A | US 2019/195994 A1 (ORCHARD DAVID ARTHUR [GB] ET AL) 27 June 2019 (2019-06-27) * paragraph [0046]; figure 2 * | 1-12 | |
| A | US 5 847 817 A (ZEDIKER MARK S [US] ET AL) 8 December 1998 (1998-12-08) * column 11, line 39 - column 12, line 49; figure 2 * | 1-12 | |
| A | US 2022/113379 A1 (VISWANATHA KUMAR BHARGAV [US] ET AL) 14 April 2022 (2022-04-14) * paragraph [0052] - paragraph [0053]; figure 9 * * paragraph [0058] - paragraph [0060]; figure 13 * | 1-12 | TECHNICAL FIELDS SEARCHED (IPC) G01S |
| A | US 2016/025843 A1 (SEBASTIAN RICHARD [US] ET AL) 28 January 2016 (2016-01-28) * paragraph [0036] * | 7 | |

The present search report has been drawn up for all claims

| Place of search | Date of completion of the search | Examiner |
|---|---|---|
| Munich | 23 May 2025 | Kaleve, Abraham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9380

This annex lists the patent family members relating to the patent documents cited in  the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| CN 114167440 | A | 11-03-2022 | NONE | | |
| US 2016161601 | A1 | 09-06-2016 | EP | 2972409 A1 | 20-01-2016 |
| | | | US | 2014269790 A1 | 18-09-2014 |
| | | | US | 2016161601 A1 | 09-06-2016 |
| | | | US | 2018329042 A1 | 15-11-2018 |
| | | | US | 2020011980 A1 | 09-01-2020 |
| | | | US | 2022252704 A1 | 11-08-2022 |
| | | | US | 2022268905 A1 | 25-08-2022 |
| | | | US | 2025035759 A1 | 30-01-2025 |
| | | | WO | 2014151046 A1 | 25-09-2014 |
| US 2019195994 | A1 | 27-06-2019 | EP | 3452849 A1 | 13-03-2019 |
| | | | US | 2019195994 A1 | 27-06-2019 |
| | | | WO | 2017191285 A1 | 09-11-2017 |
| US 5847817 | A | 08-12-1998 | NONE | | |
| US 2022113379 | A1 | 14-04-2022 | CN | 116348783 A | 27-06-2023 |
| | | | EP | 4226184 A1 | 16-08-2023 |
| | | | JP | 7650967 B2 | 25-03-2025 |
| | | | JP | 2023545411 A | 30-10-2023 |
| | | | KR | 20230071188 A | 23-05-2023 |
| | | | US | 11169246 B1 | 09-11-2021 |
| | | | US | 2022113379 A1 | 14-04-2022 |
| | | | US | 2023324514 A1 | 12-10-2023 |
| | | | WO | 2022076225 A1 | 14-04-2022 |
| US 2016025843 | A1 | 28-01-2016 | CN | 106574965 A | 19-04-2017 |
| | | | CN | 111025263 A | 17-04-2020 |
| | | | EP | 3172586 A1 | 31-05-2017 |
| | | | EP | 3444630 A1 | 20-02-2019 |
| | | | JP | 6653695 B2 | 26-02-2020 |
| | | | JP | 2017526911 A | 14-09-2017 |
| | | | TW | 201604572 A | 01-02-2016 |
| | | | TW | 201903430 A | 16-01-2019 |
| | | | US | 2016025843 A1 | 28-01-2016 |
| | | | US | 2019101630 A1 | 04-04-2019 |
| | | | WO | 2016014894 A1 | 28-01-2016 |

EPO FORM P0459

For more details about this annex : see Official Journal of the European Patent Office, No. 12/82